# EUROPÄISCHE PATENTSCHRIFT

(11) **EP 0 610 567 B1**
(45) Veröffentlichungstag und Bekanntmachung des Hinweises auf die Patenterteilung: **21.02.1996**
(21) Anmeldenummer: 93119490.6
(22) Anmeldetag: 03.12.1993
(51) Int. Cl.: B60P 3/22

(54) **Silofahrzeug**
Silo vehicle
Véhicule-silo

(30) Priorität: 10.02.1993 DE 9301815 U
(43) Veröffentlichungstag der Anmeldung: 17.08.1994
(73) Patentinhaber: FELDBINDER & BECKMANN FAHRZEUGBAU oHG, D-21423 Winsen (DE)
(72) Erfinder: Beckmann, Jan-Dirk, D-21423 Winsen/Luhe (DE); Feldbinder, Otto, D-29643 Neuenkirchen (DE)
(74) Vertreter: Richter, Werdermann & Gerbaulet

(56) Entgegenhaltungen:
- EP-A- 0 214 339
- DD-A- 291 301
- DE-A- 3 048 868

## Beschreibung

Die Erfindung betrifft ein Silofahrzeug mit rohrförmigen, auf einem Zugfahrzeug teilweise aufliegenden und durch Bodenstücke stirnseitig verschlossenen Druckbehälter als Ladungsbehälter mit mindestens einer mindestens halbzylindrischen Oberschale und mindestens zwei mindestens halbzylindrischen Unterschalen.

Silofahrzeuge werden für den Transport der unterschiedlichsten schütt- und fließfähigen Güter eingesetzt.

Ein solches Silofahrzeug als Silosattelauflieger weist einen Druckbehälter auf, bei welchem der Hauptabschnitt des Druckbehälters zylindrisch ausgebildet ist und bei dem sich an den Hauptabschnitt nach vorne ein ebenfalls zylindrischer vorderer Abschnitt anschließt, der im Durchschnitt kleiner ausgebildet ist und an dem die Sattelauflage ausgebildet ist. Die obere Mantellinie des vorderen kleineren Abschnittes des Druckbehälters fluchtet dabei mit der oberen Mantellinie des Hauptabschnittes. Der Übergang zwischen dem kleineren zylindrischen Abschnitt und dem größeren zylindrischen Hauptabschnitt wird üblicherweise durch ein konisches Zwischenteil überbrückt.

Es ist dabei bekannt, daß die zylindrische Ausgestaltung des Druckbehälters bewirkt, daß die gesamte Behälterwandung lediglich auf Zug beansprucht wird. Mit den bekannten Druckbehältern ist es dabei zwar möglich, den Laderaum zu vergrößern, da durch die unterschiedlichen Querschnitte der einzelnen Abschnitte des Behälters eine Anpassung des Druckbehälters an die räumlichen Gegebenheiten in Fahrzeuglängsrichtung möglich ist. Jedoch ist die Ausnutzung der gegebenen Möglichkeiten begrenzt, da sich aufgrund der vorgegebenen maximalen Breite des Silofahrzeugs und des vorgegebenen Kreisquerschnittes zur Erreichung der zylindrischen Ausgestaltung eine vollständige Nutzung der maximalen Höhe des Silofahrzeuges nicht möglich ist. Zur Lösung dieses Problems ist bereits vorgeschlagen worden, den Druckbehälter so auszubilden, daß er aus einem halbzylindrischen Oberteil und einem halbzylindrischen Unterteil besteht, die durch im wesentlichen ebene Zwischenwandteile miteinander verbunden werden. Diese Zwischenwandteile sind durch Verrippungen o.dgl. versteift, und die Zwischenwandteile werden durch Zuganker miteinander verbunden (DE-OS 30 48 868).

Bei einem ähnlichen Vorschlag ist vorgesehen, daß die Zwischenwandteile in Sandwich-Bauweise mehrlagig ausgebildet sind (EP-A-0 214 339/DE 85 25 167 U1).

Auch ist bereits vorgeschlagen worden, einen druckfesten Tank unter Berücksichtigung der bei ISO-Containern verfügbaren Querschnittsabmessungen sowie der erreichbaren Kalzwalzbreiten aus zwei Mantelschalen, deren jede aus zwei in Längsrichtung miteinander verschweißten kaltgewalzten Blechen vorgefertigt ist, einem unteren rohrförmigen Längsholm und einem oberen, etwa wannenartigen Längsholm aufzubauen. Die beiden Längsholme sind über Zuganker miteinander verbunden. Der obere Längsholm besteht aus einer in das Tankinnere eingreifenden Scheitelschale, einer deren obere Kanten miteinander verbindenden Zugplatte und einem zwischen die Scheitelschale und die Zugplatte eingefügten Profilelement. Die aus den genannten Abmessungsgründen erforderliche verhältnismäßig breite Scheitelschale dient gleichzeitig zur Aufnahme des Mannlochstutzens und sonstiger Tankarmaturen und bildet für diese eine Überlaufwanne, die durch einen oder mehrere rohrförmige Zuganker nach unten entleerbar ist (DD 291 301 A5).

Diese bekannten Vorschläge haben jedoch wesentliche Nachteile, da die vorgesehenen, im wesentlichen ebenen, Zwischen- oder Seitenwandteile bei einem Einsatz des Behälters als Druckbehälter hohen Beanspruchungen ausgesetzt sind, da bei ebenen Teilen neben den von der Unter- bzw. Oberschale übertragenen Zugkräften auch Biegemomente auftreten, denen schon bei den gekannten Vorschlägen durch zusätzliche Maßnahmen wie Verrippungen, Versteifungen oder durch einen komplizierteren Aufbau entgegen gewirkt wurde.

Es ist daher Aufgabe der vorliegenden Erfindung, einen Behälter der eingangs genannten Art so weiterzubilden, daß der bezüglich der Höhe und der Breite des Silofahrzeuges zur Anordnung des Ladungsbehälters begrenzte Raum optimal ausgenutzt wird und daß gleichzeitig ein einfacher Aufbau des Silobehälters erreicht wird, wobei die ladungs- und druckabhängigen Belastungsmöglichkeiten den bekannten Druckbehältern entsprechen bzw. diese übertreffen sollen.

Diese Aufgabe wird durch die im Anspruch 1 gekennzeichneten Merkmale gelöst.

Der Kerngedanke besteht dabei darin, daß die Oberschale und die vordere und hintere Unterschale nicht als Halbzylinder ausgebildet sind, sondern als ein Teilzylinder, der größer ist als ein Halbzylinder, so daß sich im Querschnitt mehr als ein Halbkreis ergibt. Wie weit die unteren Ränder der Oberschale bzw. die oberen Ränder der Unterschale nach innen verlaufen, hängt davon ab, wie groß der Abstand der Mittelpunkte der Halbschalen sein soll, d.h., welche Höhe der Druckbehälter im vorderen Abschnitt und im Hauptabschnitt haben soll. Da sich ja mit wachsender Entfernung der Mittelpunkte eine Einschnürung in der Mitte des Druckbehälters ergibt, muß hier ein Kompromiß gefunden werden. Es hat sich dabei gezeigt, daß ein Abstand der Mittelpunkte jeweils der zusammengehörigen teilzylindrischen Ober- und Unterschale im Bereich von etwa 45 % - 60 % des Radius der teilzylindrischen Oberschale bzw. Unterschale, und bevorzugterweise von etwa 50 % des Radius der Oberschale zu der guten Ergebnissen führt. Dies führt dazu, daß die jeweils von der Oberschale bzw. der Unterschale umfaßte Querschnittsfläche etwa 10 % bis 20 % größer ist als ein Halbkreis.

Durch die Ableitung der auf das im Stoßbereich der Schalen zwischengeschaltete Metallband übertragenen Zugkräfte durch die Zuganker wird eine gleichmäßige Beanspruchung erreicht, und es können auch bei Druckbelastungen keine Momente auftreten.

Durch diesen Aufbau des Ladungsbehälters ist es erreichbar, daß im Ladungsbehälter praktisch nur Zugbeanspruchungen auftreten, denn Biegebeanspruchungen treten lediglich im Bereich der Übergänge der Unterschalen zu dem konischen oder halbzylindrischen Übergangsstück auf, wobei es sich herausgestellt hat, daß die dort auftretenden Belastungen so klein gehalten werden können, so daß insgesamt die Ausbildung des Behälters nach der sogenannten Membran- oder Seifenblasentheorie erfolgt, die ja gerade sicherstellt, daß die einzelnen Bauteile nur Zugbelastungen unterliegen.

Der weitere große Vorteil besteht dabei darin, daß gleichzeitig eine ganz einfache Konstruktion gefunden werden konnte, die es ermöglicht, den für die Anordnung des Ladungsbehälters zur Verfügung stehenden Raum optimal zu nutzen, ohne hier besonderen konstruktiven Aufwand zu treiben. Außerdem können die aufwendigen Seiten- oder Zwischenwände ganz entfallen.

Die konstruktive Ausgestaltung der Grundidee besteht darin, daß einfach jeder Oberschalenabschnitt auf dem ihm zugeordneten Unterschalenabschnitt angeordnet wird, wobei im Berührungsbereich ein flaches Metallband angeordnet wird, auf dem die Schalen mit ihrem Stoßbereich aufgesetzt befestigt, d.h. angeschweißt werden. Die sich gegenüberliegenden Metallbänder, die ja die sich gegenüberliegenden Berührungslinien der Schalen bilden, sind durch eine Anzahl von zueinander beabstandeten Zugankern untereinander verbunden, so daß sich im Bereich der Berührungslinien nur Zugkräfte, und zwar in Kraftaufnahmerichtung des Zugankers und in Richtung der Kraftaufnahmelinien der Schalen ergeben.

Um die Zuganker konstruktiv einfach, gleichzeitig gewichtssparend und hochbelastbar auszubilden, ist vorgesehen, daß jedes Metallband im Bereich jedes Zugankers ein Übertragungsstück zur Kraftübertragung aufweist, das mit dem jeweiligen Zugankerende lösbar verbunden ist.

Es ist dabei vorteilhafterweise vorgesehen, daß das Zugankerende als flacher, in der Größe mit einer ersten Seitenfläche des Übertragungsstückes korrespondierender, etwa quaderförmiger Auflagerkörper ausgebildet ist, der bevorzugterweise einen etwa trapezförmigen Querschnitt aufweist, wodurch gewährleistet ist, daß der Übergang vom Zuganker vom Übertragungskörper und damit zur Unter- bzw. Oberschale relativ glatt verläuft, wodurch die Reinigungsmöglichkeiten und insbesondere die Selbstreinigungsfähigkeit des Silobehälters beim bzw. nach dem Entleeren besonders gut sind. Um diese noch zu verbessern, kann bevorzugterweise vorgesehen werden, gekrümmte Verblendungsteile anzuordnen, die die Seiten des Übertragungsstückes abdecken, so daß eine völlig glatte Innenoberfläche ohne Hinterschneidungen und Ecken entsteht. Ebenso ist es möglich, auf der Außenseite Verblendungsplatten zwischen dem Übertragungsstück und den Schalen anzubringen, um eine glatte Außenoberfläche zu schaffen, die nicht zur zu leichteren Reinigungsmöglichkeiten führt, sondern auch ein optisch ansprechenderes Äußeres des Ladungsbehälters mit sich bringt.

Weitere vorteilhafte Ausgestaltungen und Weiterbildungen der Erfindung sind in den Unteransprüchen gekennzeichnet.

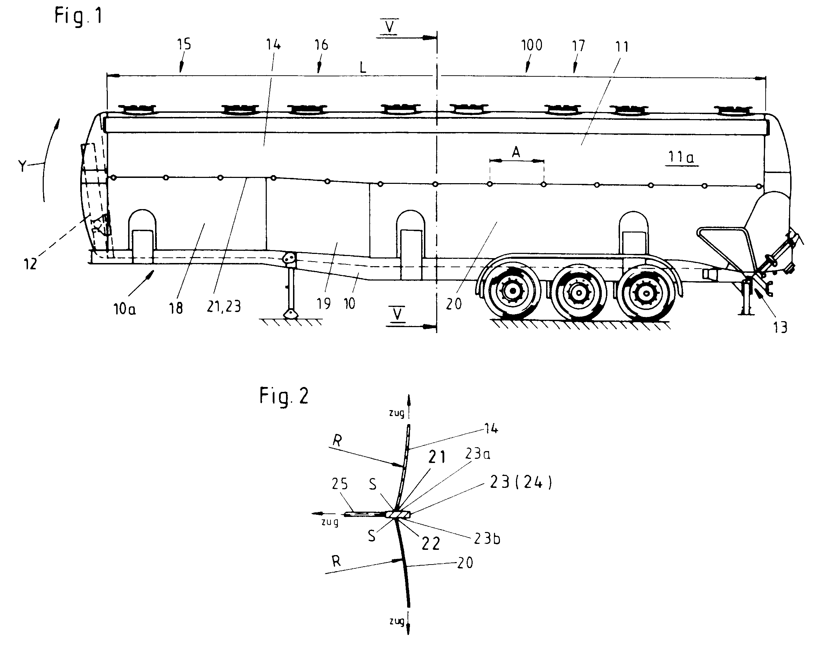

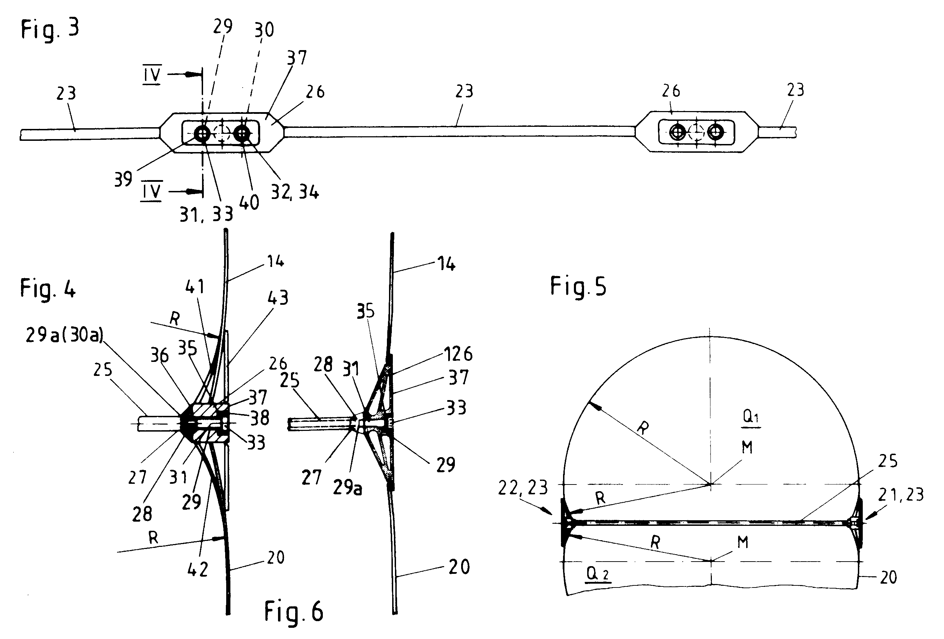

Ein Ausführungsbeispiel der Erfindung wird nachstehend anhand der Zeichnungen näher erläutert. Es zeigen in rein schematischer Darstellung
- **Fig**. **1**: einen Silosattelauflieger in einer Seitenansicht,
- **Fig**. **2**: die Kraftrichtungen im Berührungsbereich einer Oberschale und einer Unterschale in rein schematischer Darstellung,
- **Fig**. **3**: einen Abschnitt eines Metallbandes mit Übertragungskörpern in rein schematischer Darstellung,
- **Fig**. **4**: einen Übertragungskörper in einer Schnittdarstellung gemäß Linie IV-IV in Fig.3,
- **Fig**. **5**: einen Teilschnitt durch den Ladungsbehälter gemäß Linie V-V in Fig.1, und
- **Fig**. **6**: eine weitere Ausführungsform eines Übertragungskörpers.

Der ganz allgemein als Silofahrzeug 100 zu bezeichnende Silokippsattelauflieger, der ohne Zugfahrzeug dargestellt ist, besteht aus einem Fahrzeugrahmen 10, an dem alle üblichen Elemente eines Silokippsattelaufliegers wie Fahrwerk, Stützen, Sattelkupplung 10a mit dem Königszapfen u.dgl. ausgebildet sind, so daß der Fahrzeugrahmen 10 dem nicht dargestellten Zugfahrzeug in üblicher Weise aufgesattelt werden kann. Auf den Fahrzeugrahmen 10 ist der als Silobehälter für schütt- oder fließfähiges Gut ausgebildete Druckbehälter 11 aufgesetzt. Auf den Fahrzeugrahmen 10 kann eine Hubeinrichtung 12, die in der Zeichnung gestrichelt angedeutet ist, vorgesehen sein, wobei der Druckbehälter 11 dann bei einem Ausfahren der Hubeinrichtung 12 um die Schwenkachse 13 in Y-Richtung verschwenkbar ist.

Der Druckbehälter 11 weist eine teilzylindrische Oberschale 14 auf, die sich im wesentlichen über die gesamte Länge L des Druckbehälters 11 erstreckt und im wesentlichen in einen Vorderbereich 15, der dem Aufsattelbereich entspricht, einen Übergangsbereich 16 und einen Hauptbereich 17 unterteilt werden kann, die nachstehend auch als Abschnitte bezeichnet werden. Im vorderen Bereich 15 des Druckbehälters 11 schließt sich eine erste teilzylindrische Unterschale 18 an die Oberschale 14, wobei hier ein geringerer Abstand zwischen dem Mittelpunkt M1 des Radius R der Oberschale 14 und dem Mittelpunkt M2 des Radius R der Unterschale 18 vorgesehen ist (Fig.5), da hier wegen der Sattelkupplung 10a nur beschränkter Raum zur Verfügung steht.

Im Übergangsbereich 16 schließt sich heckwärts an die erste Unterschale 18 die zweite Unterschale 19 mit einer konischen Form oder einer schräg eingesetzten teilzylindrischen Form an, an die sich weiter heckwärts im Hauptbereich 17 die teilzylindrische, dritte Unterschale 20 anschließt. Die Ränder der Unterschalen 18,19,20 stoßen dabei nicht direkt gegen die entsprechenden Ränder der Oberschale 14, sondern im Bereich der Berührungslinien 21,22 ist ein flaches Metallband 23,24 als Stoßfläche zwischengeordnet, auf dessen Flachseiten 23a,24a die Ränder S der Oberschale 14 bzw. der Unterschalen 18,19,20 festgeschweißt werden, so daß sich ein sozusagen einstückiger Behälter ergibt. Die so die Berührungslinien bildenden Metallbänder 23,24 sind durch zueinander beabstandete (Abstand A) Zuganker 25 miteinander verbunden. Hierdurch ergibt sich ein Verlauf der Kräfte, wie er in Fig.2 rein schematisch angedeutet ist.

Die Gestaltung ist dabei erfindungsgemäß so, daß jede Oberschale 14 eine von ihr umfaßte Querschnittsfläche Q1 aufweist, die ein Kreissegment ist, das um einen bestimmten Betrag größer ist als ein Halbkreis, und daß jede Unterschale 18,19,20 eine von ihr umfaßte Querschnittsfläche Q2 aufweist, die ein Kreissegment ist, das um einen bestimmten Betrag größer ist als ein Halbkreis, wobei die Querschnittsfläche Q1 jeder Oberschale 14 10% - 20 % größer ist als ein Halbkreis und die Querschnittsfläche Q2 jeder Unterschale 18,19,20 10 % - 20 % größer ist als ein Halbkreis.

Dadurch, daß sowohl die Oberschale 14 als auch die Unterschale 20 einen teilkreisförmigen Querschnitt mit dem Radius R aufweisen und das Metallband 24 durch den Zuganker 25 entlastet wird, stellen sich in allen drei Teilen, nämlich in der Oberschale 14, in der Unterschale 20 und im Zuganker 25 bei Druckbelastung nur Zugkräfte ein.

Um einen momentfreien Kräftefluß zwischen den jeweiligen Schalen und dem Zuganker 25 zu gewährleisten, ist erfindungsgemäß ein in den Fig.3 und 4 näher dargestellter Übertragungskörper 26 vorgesehen, daß jeweils ein Zugankerende 27 mit dem Metallband und den Schalen verbindet. Jedes Zugankerende 27 des jeweiligen Zugankers 25 ist dabei als Auflagerkörper 28 ausgebildet, der bevorzugterweise einen etwa trapezförmigen Querschnitt aufweist und als flacher, in der Größe mit ersten Seitenfläche 36 des Übertragungskörpers 26 korrespondierender Körper ausgebildet ist. Der Übertragungskörper 26 selbst ist dabei von etwa quaderförmiger Formgebung und weist zwei Durchbohrungen 29,30 auf, durch die zwei Befestigungsschrauben 31,32 hindurchgeführt sind, die in entsprechende Sacklöcher 29a,30a mit Innengewinde im Auflagerkörper 28 eingeschraubt sind. Die Köpfe 33,34 der Befestigungsschrauben 31,32 sind dabei in den Übertragungskörper 26 versenkt, und zwar dadurch, daß dieses eine langlochartige Vertiefung 35 aufweist, in die eine Verstärkungsplatte 39 fluchtend eingelegt ist, die wiederum Einziehungen 39,40 so aufweist, daß in diesen die Köpfe 33,34 der Befestigungsschrauben 31,32 versenkt sind. Da das Übertragungsstück aus Aluminium gefertigt ist, wird durch die bevorzugterweise aus VA-Stahl gefertigte Verstärkungsplatte 38 der Kraftfluß von den Köpfen 33,34 der Befestigungsschrauben 31,32 in geeigneter Weise in den Übertragungskörper 26 geführt. Die Befestigungsschrauben 31,32 sind dabei fest in den Auflagerkörper 28 eingeschraubt, so daß ein Kraftfluß von den Schalen über den Übertragungskörper 26, weiter über die Schraubenköpfe 33,34 in den Zuganker 25 problemlos möglich ist.

Um beispielsweise bei der Beförderung von Schüttgütern oder staubigen Gütern im Druckbehälter 11 die Reinigung zu erleichtern, können gekrümmte Verblendungsteile 41,42 an der Behälterinnenseite in der in Fig.4 dargestellten Weise zwischen dem Übertragungskörper 26 und den Schalen 14 bzw. 20 angeordnet werden, so daß sich relativ glatte und leicht zu reinigende Oberflächen ergeben. Auf der Außenseite des Druckbehälters 11 kann dann ebenfalls eine Verblendungsplatte 43 mit entsprechenden Öffnungen für die Übertragungskörper 26 vorgesehen werden.

In Fig.6 ist eine weitere Form eines Übertragungskörpers 126 dargestellt. Hierbei ist anstelle des quaderförmigen Grundkörpers ein Strangpressprofil vorgesehen, das prinzipiell den gleichen Aufbau aufweist, wie der anhand von Fig.3 und 4 beschriebene Übertragungskörper 26.

## Patentansprüche

1. Silofahrzeug (100) mit rohrförmigem, auf einem Zugfahrzeug teilweise aufliegenden und durch Bodenstücke stirnseitig verschlossenen Druckbehälter (11) mit mindestens einer mindestens halbzylindrischen Oberschale (14) und mindestens zwei mindestens halbzylindrischen Unterschalen (18,19,20),
dadurch gekennzeichnet,
daß jede Oberschale (14) eine von ihr umfaßte Querschnittsfläche (Q1) aufweist, die ein Kreissegment ist, das um einen bestimmten Betrag größer ist als ein Halbkreis,
daß jede Unterschale (18,19,20) eine von ihr umfaßte Querschnittsfläche (Q2) aufweist, die ein Kreissegment ist, das um einen bestimmten Betrag größer ist als ein Halbkreis,
daß die sich gegenüberliegenden Berührungslinien (21,22) jeder Oberschale (14) mit der ihr jeweils zugeordneten Unterschale (18,19,20) durch Zuganker (25) miteinander verbunden sind, daß jede Berührungslinie (21, 22) von einem flachen Metallband (23, 24), vorzugsweise Stahlband oder Aluminiumband, gebildet ist, und daß jedes Metallband (23, 24) im Bereich jedes Zugankers (25) einen verbreiterten Übertragungskörper (26; 126) aufweist.

2. Silofahrzeug nach Anspruch 1,
dadurch gekennzeichnet,
daß die Querschnittsfläche (Q1) jeder Oberschale (14) 10 % - 20 % größer ist als ein Halbkreis.

3. Silofahrzeug nach Anspruch 1 oder 2,
dadurch gekennzeichnet,
daß die Querschnittsfläche (Q2) jeder Unterschale (18,19,20) 10 % - 20 % größer ist als ein Halbkreis.

4. Silofahrzeug nach einem der Ansprüche 1 bis 3,
dadurch gekennzeichnet,
daß auf jeder der beiden Flachseiten (23a,23b) des Metallbandes (23,24) eine der Oberschalen (14) oder Unterschalen (18,19,20) mit ihrem Stoßbereich (S) aufgesetzt befestigt ist.

5. Silofahrzeug nach Anspruch 4,
dadurch gekennzeichnet,
daß jede der Ober- und/oder Unterschalen an dem Metallband (23,24) angeschweißt ist.

6. Silofahrzeug nach einem der Ansprüche 4 oder 5,
dadurch gekennzeichnet,
daß je zwei gegenüberliegende Metallbänder (23, 24) durch eine Anzahl voneinander beabstandeten Zugankern (25) untereinander verbunden sind.

7. Silofahrzeug nach einem der Ansprüche 1 bis 6,
dadurch gekennzeichnet,
daß jeder Übertragungskörper (26;126) mit je ein Zugankerende (27) lösbar verbunden ist.

8. Silofahrzeug nach Anspruch 7,
dadurch gekennzeichnet,
daß das Zugankerende (27) als flacher, in der Größe mit einer ersten Seitenfläche (36) des Übertragungskörpers (26;126) korrespondierender quaderförmiger Auflagerkörper (28) ausgebildet ist.

9. Silofahrzeug nach einem der Ansprüche 1 bis 8,
dadurch gekennzeichnet,
daß der Übertragungskörper (26;126) als quaderförmiger Körper ausgebildet ist, der mindestens eine Durchbohrung (29,30) aufweist, durch die eine Befestigungsschraube (31,32) hindurchführbar ist, die mit ihrem Kopf (33,34) in einer nutartigen Vertiefung (35) auf einer zweiten, der ersten Seitenfläche (36) gegenüberliegenden Seitenfläche (37) des Übertragungsstücks (26) anordbar ist und mit ihrem Schaftende in eine entsprechende Gewindebohrung (29a,30a) im Auflagerkörper (28) des Zugankerendes (27) einschraubbar ist.

10. Silofahrzeug nach Anspruch 9,
dadurch gekennzeichnet,
daß in der langlochartigen Vertiefung (35) eine in ihrer Form mit der Form der Vertiefung (35) korrespondierende Verstärkungsplatte (38) mit mindestens einer Einziehung (39,40) für den Kopf (33,34) der Befestigungsschraube (31, 32) angeordnet ist.

11. Silofahrzeug nach einem der Ansprüche 8 bis 10,
dadurch gekennzeichnet,
daß der Auflagerkörper (28) des Zugankerendes (27) einen etwa trapezförmigen Querschnitt aufweist.

12. Silofahrzeug nach einem der Ansprüche 1 bis 11,
dadurch gekennzeichnet,
daß der Zuganker (25) und der Auflagerkörper (28) aus VA-Stahl bestehen.

13. Silofahrzeug nach einem der Ansprüche 10 oder 11,
dadurch gekennzeichnet,
daß die Verstärkungsplatte (38) aus VA-Stahl besteht.

14. Silofahrzeug nach einem der Ansprüche 7 bis 13,
dadurch gekennzeichnet,
daß der Übertragungskörper (26) aus Aluminium besteht.

15. Silofahrzeug nach einem der Ansprüche 1 bis 14,
dadurch gekennzeichnet,
daß nur eine durchgehende Oberschale (14) und drei Unterschalen (18,19,20) vorgesehen sind.

## Claims

1. Silo vehicle (100) with tubular pressure container or tank (11) partly suported on a truck tractor and closed at the front end by means of bottom pieces with at least one semicylindrical top shell (14) and at least two semicylindrical bottom shells (18, 19, 20),
**characterized in that**
each top shell (14) possesses a cross-sectional area (Q1) comprised by the same which is a segment of a circle that is larger by a certain amount than a semicircle,
in that each bottom shell (18, 19, 20) possesses a cross-sectional area (Q2) comprised by the same which is a segment of a circle that is larger by a certain amount than a semicircle,
in that the oppositely located contact lines (21, 22) of each top shell (14) are, by means of tie rods (25), interconnected with the bottom shell (18, 19, 20) allocated to the latter in each case,
in that each contact line (21, 22) is formed by a flat metal band (23, 24), preferably steel or aluminium band,
and in that each metal band (23, 24), within the area of each tie rod (25), possesses a broadened transmission body (26;126).

2. Silo vehicle according to Claim 1,
**characterized in that**
the cross-sectional area (Q1) of each top shell (14) is 10% - 20% larger than a semicircle.

3. Silo vehicle according to either Claim 1 or 2,
**characterized in that**
the cross-sectional surface (Q2) of each bottom shell (18, 19, 20) is 10% - 20% larger than a semicircle.

4. Silo vehicle according to any of Claims 1 to 3,
**characterized in that,**
on each of the two flat sides (23a, 23b) of the metal band (23, 24), one of the top shells (14) or bottom shells (18, 19, 20) is mounted so as to be attached with its abutting area (S).

5. Silo vehicle according to Claim 4,
**characterized in that**
each of the top and/or bottom shells is welded onto the metal band (23, 24).

6. Silo vehicle according to either Claim 4 or 5,
**characterized in that**
two oppositely located metal bands (23, 24) each are interconnected by means of a plurality of mutually spaced-apart tie rods (25).

7. Silo vehicle according to any of Claims 1 to 6,
**characterized in that**
each transmission body (26;126) is detachably connected to one tie rod end (27) each.

8. Silo vehicle according to Claim 7,
**characterized in that**
the tie rod end (27) is constructed in the form of a flat cuboid supporting body (28) corresponding in size to a first lateral surface (36) of the transmission body (26; 126).

9. Silo vehicle accordingto any of Claims 1 to 8,
**characterized in that**
the transmission body (26; 126) is constructed in the form of a cuboid body which possesses at least one through bore (29, 30), through which one of the mounting screws (31, 32) can be passed, which can be disposed with its head (33, 34) on a second lateral surface (37) located opposite the first lateral surface (36) of the transmission piece (26) and which, with its shank end, can be screwed into a pertinent tapped bore (29a, 30a) in the supporting body (28) of the tie rod end (27).

10. Silo vehicle according to Claim 9,
**characterized in that,**
in the oblong hole-like recess (35), a reinforcing plate (38) corresponding in its configuration to that of the recess (35) possessing at least one constricted portion (39, 40) for the head (33, 34) of the mounting screws (31, 32) is disposed.

11. Silo vehicle according to any of Claims 8 to 10,
**characterized in that**
the supporting body (28) of the tie rod end (27) possesses an approximately trapezoidal cross-section.

12. Silo vehicle according to any of Claims 1 to 11,
**characterized in that**
the tie rod (25) and the supporting body (28) are comprised of vanadium steel.

13. Silo hehicle according to either Claim 10 or 11,
**characterized in that**
the reinforcing plate (38) is comprised of vanadium steel.

14. Silo vehicle according to any of Claims 7 to 13,
**characterized in that**
the transmission body is comprised of aluminium.

15. Silo vehicle according to any of Claims 1 to 14,
**characterized in that**
only one continuous top shell (14) and three bottom shells (18, 19, 20) are provided.

## Revendications

1. Véhicule-silo (100) avec un réservoir sous pression (11) tubulaire, partiellement appuyé sur un véhicule de traction et fermé côté face par des pièces de fond, avec au moins une coque supérieure (14) semi-cylindrique et au moins deux coques inférieures (18, 19, 20) semi-cylindriques,
**caractérisé en ce**
que chaque coque supérieure (14) présente une superficie de section (Q1) entourée par elle qui est un segment de cercle qui est plus grand d'une certaine, valeur qu'un demi-cercle,
que chaque coque inférieure (18, 19, 20) présente une superficie de section (Q2) entourée par elle qui est un segment de cercle qui est plus grand d'une certaine valeur qu'un demi-cercle,
que les lignes de contact (21, 22) opposées de chaque coque supérieure (14) sont reliées l'une à l'autre à la coque inférieure (18, 19, 20) qui lui correspond respectivement par des tirants d'ancrage (25),
que chaque ligne de contact (21, 22) est formée par une bande plate de métal (23, 24), de préférence une bande d'acier ou d'aluminium, et
que chaque bande de métal (23, 24) présente, dans la zone de chaque tirant d'ancrage (25), un corps de transmission élargi (26 ; 126).

2. Véhicule-silo selon la revendication 1,
**caractérisé en ce**
que la superficie de la section (Q1) de chaque coque supérieure (14) est supérieure de 10 % à 20 % à un demi-cercle.

3. Véhicule-silo selon la revendication 1 ou 2,
**caractérisé en ce**
que la superficie de la section (Q2) de chaque coque inférieure (18, 19, 20) est supérieure de 10 % à 20 % à un demi-cercle.

4. Véhicule-silo selon l'une des revendications 1 à 3,
**caractérisé en ce**
qu'une des coques supérieures (14) ou des coques inférieures (18, 19, 20) est fixée sur chacun des deux côtés plats (23a, 23b) de la bande de métal (23, 24) en étant posée avec sa zone de jointure (S).

5. Véhicule-silo selon la revendication 4,
**caractérisé en ce**
que chaque des coques supérieures et/ou des coques inférieures est soudée à la bande de métal (23, 24).

6. Véhicule-silo selon l'une des revendications 4 ou 5,
**caractérisé en ce**
que respectivement deux bandes de métal (23, 24) opposées sont reliées l'une à l'autre par un nombre de tirants d'ancrage (25) espacés l'un de l'autre.

7. Véhicule-silo selon l'une des revendications 1 à 6,
**caractérisé en ce**
que chaque corps de transmission (26 ; 126) est relié de manière amovible à respectivement une extrémité (27) de tirant d'ancrage.

8. Véhicule-silo selon la revendication 7,
**caractérisé en ce**
que l'extrémité (27) du tirant d'ancrage est configurée comme corps d'appui (28) plat en forme de parallélépipède dont la grandeur correspond à une première face latérale (36) du corps de transmission (26 ; 126).

9. Véhicule-silo selon l'une des revendications 1 à 8,
**caractérisé en ce**
que le corps de transmission (26 ; 126) est configuré comme corps en forme de parallélépipède qui présente au moins un perçage (29, 30), qui peut être traversé par l'une des vis de fixation (31, 32), qui peut être placée avec sa tète (33, 34) dans un évidement de type rainure (35) sur une seconde face latérale (37) de la pièce de transmission (26) qui est opposée à la première face latérale (36) et qui peut être vissée avec son extrémité de tige dans une forure filetée (29a, 30a) correspondante dans le corps d'appui (28) de l'extrémité (27) du tirant d'ancrage.

10. Véhicule-silo selon la revendication 9,
**caractérisé en ce**
qu'une plaque de renforcement (38), dont la forme correspond à la forme de l'évidement (35), avec au moins un retrait (39, 40) pour la tête (33, 34) de la vis de fixation (31, 32) est placée dans l'évidement (35).

11. Véhicule-silo selon l'une des revendications 8 à 10,
**caractérisé en ce**
que le corps d'appui (28) de l'extrémité (27) du tirant d'ancrage présente une section à peu près trapézoïdale.

12. Véhicule-silo selon l'une des revendications 1 à 11,
**caractérisé en ce**
que le tirant d'ancrage (25) et le corps d'appui (28) sont en acier VA.

13. Véhicule-silo selon l'une des revendications 10 ou 11,
**caractérisé en ce**
que la plaque de renforcement (38) est en acier VA.

14. Véhicule-silo selon l'une des revendications 7 à 13,
**caractérisé en ce**
que le corps de transmission (26) est en aluminium.

15. Véhicule-silo selon l'une des revendications 1 à 14,
**caractérisé en ce**
que seules une coque supérieure continue (14) et trois coques inférieures (18, 19, 20) sont prévues.
